Europäisches Patentamt

European Patent Office

Office européen des brevets

(11) Publication number: **0 076 897**
**B1**

(12) **EUROPEAN PATENT SPECIFICATION**

(45) Date of publication of patent specification: **07.05.86**

(51) Int. Cl.⁴: **C 09 K 5/06, F 28 D 21/00**

(21) Application number: **82106953.1**

(22) Date of filing: **06.08.82**

(54) Latent heat accumulator, manufacturing process and uses thereof.

(30) Priority: **19.08.81 CH 5351/81**

(43) Date of publication of application:
**20.04.83 Bulletin 83/16**

(45) Publication of the grant of the patent:
**07.05.86 Bulletin 86/19**

(84) Designated Contracting States:
**AT BE CH DE FR GB IT LI LU NL SE**

(56) References cited:
**DE-A-2 552 698**
**DE-A-2 741 829**
**DE-A-3 016 730**
**FR-A-2 428 223**

(73) Proprietor: **STIFFLER, Mario**
**Via Ai Ronchi**
**CH-6936 Cademario (CH)**
(84) **BE CH DE FR GB LI LU NL SE AT**
(73) Proprietor: **T.E.A. SISTEMI S.R.L.**
**V.le B. d'Este 17**
**Milano (IT)**
(84) **IT**

(72) Inventor: **Stiffler, Mario**
**Via ai Ronchi**
**CH-6936 Cademario (CH)**

(74) Representative: **Faggioni, Marco, Dr. Ing. et al**
**FUMERO - Studio Consulenza Brevetti**
**Widenmayerstrasse 4/I**
**D-8000 München 22 (DE)**

The file contains technical information
submitted after the application was filed and
not included in this specification

Courier Press, Leamington Spa, England.

## Description

The present invention relates to a heat accumulator and, in particular, to a heat accumulator apt to store considerable amounts of heat at a selected temperature.

The problem of making use of the heat available at low temperatures (for instance, at room temperature or a few tens of °C higher) has always been difficult to solve. This not so much for lack of possible utilization of the heat at this temperature (it is in fact sufficient to think of the heating of environments, or of the production of hot water for sanitary use), but rather owing to the difficulty of accumulating said heat during the periods and in the places where it is produced, so as to then be able to restore it when and where necessary.

It is well known, in fact, that the residual heat of a large number of industrial processes constitutes, in most cases, a processing "rejection" which has to be eliminated in the air or in water, with consequent heat pollution phenomena. The utilization of this heat for the heating of rooms or of water is often neither possible nor economically convenient, due to the difficulty of conciliating the requirements of consumption and those of heat production and thus, as a matter of fact, due to the unavailability of a satisfactory heat storage system.

Even in plants which make use of solar energy—to which the invention specifically, though not exclusively, refers—the fundamental problem, still to be solved, is that concerning the storage of the heat absorbed by the collecting surfaces and not immediately used up. For this purpose, one simply uses at present large insulated reservoirs connected to the circuit of the working fluid (generally consisting of water) and filled by the same. This system, however, as well as taking up considerable space, is usually apt to satisfy only the requirements of storage connected to the day-and-night period, for what concerns the production of hot water for sanitary use. Whereas, the problem of producing an accumulator, allowing to store during the summer period an amount of heat such as to enable hot water to be delivered during the winter period without resorting to any other sources of energy, still has to be solved, unless one were to use reservoirs having such dimensions and characteristics of insulation, as to result extremely costly.

Even more so, on account of the foregoing, it has been impossible up-to-date to make use of solar energy for heating environments during the winter season. In fact, the solutions proposed—all on an experimental level—require appropriately conceived structures, having such costs and structural characteristics as to make it practically unthinkable for them to be adopted in the normal building industry.

The drawbacks evidenced by the current heat storage devices, namely the incapability to accumulate considerable amounts of heat in a limited space, are substantially due to the fact that heat is stored therein under form of specific heat.

This latter in fact, is given by the product of the heat storage fluid mass multiplied by its specific heat and by the difference in temperature between the heat storage fluid and the environment. Consequently, the only variable on which it is normally possible to operate is the heat storage fluid mass, in that the temperature difference is imposed—seen that, as stated, low temperature plants are involved—and it is generally rather low (from a few °C up to a few tens of °C), while the specific heat is anyhow very low for all the fluids of practical interest (it in fact has its highest value for water with 1 kcal/dm³) (4,18 kJ/dm³).

In order to overcome these drawbacks, it has been thought to adopt storage systems which store the heat under form of latent heat (in particular, melting heat or heat of crystallization), and not under form of specific heat. The advantages of this choice are evident. The latent heats per unit of volume are in fact far higher than the corresponding specific heats. Furthermore, they allow to transfer the heat at a constant temperature, already known at the planning stage.

The latent heat storage systems, which have so far found some practical application, are confined to the field of temperatures exceeding 900°K (for instance, in the heat accumulators adopted in the solar concentration systems, especially in the space field).

Various attempts have also been made to obtain heat accumulators using the latent heat of chemical substances having a lower melting temperature. In fact, these accumulators appear to be particularly suited for use in the solar plants, wherein no concentration of sun radiations is carried out.

The patent DE—A—2 741 829 suggests for example the use of a latent heat accumulator formed by cells filled with paraffin dispersed in the mass of the heat exchange fluid; the patent FR—A—2 428 223 describes a central heat accumulator too, formed of a plurality of packed pockets, containing a mixture of water and glycol, in which the latent melting heat of the water-ice system is used. These two systems are not however of particular interest both for the temperature of heat exchange of the products used, and because these latter easily form, during the solidification, a solid film on the heat exchange wall, so reducing considerably the heat-transfer coefficient. From the point of view of the possibility of storing high quantities of heat, other products result therefore more valid and in particular the ones classified in the group of hydrate salts, which have a latent heat of crystallisation very high, and temperature of exchange more interesting (for instance, Glauber salt with 32.4°C melting point).

In the Patent DE—A—3 016 730 a heat accumulator is described, which actually uses a hydrate salt, and precisely the hydrate calcium chloride, and the patent DE—A—2 552 698 too seems to refer to this kind of products even if none of these products is precisely cited. Both these systems however have not been used in the practice as they have not solved the greatest inconvenient connected to the nature itself of the hydrate salts. These compounds in fact although have a high latent melting heat at convenient temperatures, combined with an acceptable cost, evidence features of evaporation and/or chemical unstability in particular for separation of phases, which alter their physical characteristics already after only 30 or 40 melting and subsequent solidifcation cycles; they are therefore practically useless for the above mentioned purpose.

In consideration of the above, the cited systems have so far found no practical application in spite of the remarkable advantages which they could on the other hand provide.

It will be noted that, so far, only the case of latent melting heat has been intentionally mentioned, as the latent heat of vaporization cannot be conveniently utilized owing to the wide volumetric variations between the liquid phase and the gaseous phase.

The object of the present invention is to overcome the aforespecified drawbacks, which have so far strongly limited the utilization of heat sources at low temperature, by providing a latent heat accumulator apt to store into a limited space considerable quantities of heat at a predetermined temperature, and in which the physical characteristics of the substance subject to cyclic changes of state are substantially free from phenomena of decay in the long run, independently of the number of cycles.

Another object of the present invention is to indicate a process for the production of the aforespecified heat accumulator.

The aforementioned objects are obtained, according to the present invention, by means of a latent heat accumulator of the type using a substance with a high latent melting heat per unit of volume and with a high thermal conductivity, said substance being enclosed in a plurality of sealed cells formed of a thermoformable plastic material apt to be heat sealed, characterized in that said substance is a chemical compound included in the group consisting of hydrate salts, each of said cells has its three dimensions of the order of magnitude of centimeters and a volume of less than 100 cc, and said substance has a melting temperature included between 0°C and 100°C.

According to a characteristic of the invention, said hydrate salts are, in particular, hydrate phosphates, sulphates and sulphites.

The use of the accumulator according to the present invention becomes particularly convenient, simple and quick, if the accumulator itself is manufactured according to a preferred process comprising the following stages:

— forming a plurality of small cavities into at least one sheet of a thermoformable plastic material;
— filling said cavities with said substance having a high latent melting heat, at the fluid state;
— heat sealing said cavities, under partial vacuum, so as to form a plurality of sealed cells, filled with said substance and practically having no air-locks.

The invention will anyhow be described in further detail, with reference to some preferred embodiments thereof, shown in the accompanying drawings, in which:

Fig. 1 is a diagrammatic view showing a machine for the continuous production of the sealed cells forming heat accumulator according to the present invention;

Fig. 2 illustrates a method for hanging chains of cells inside a heat storage reservoir (not shown);

Fig. 3 shows a single cell as used in mixing with concrete and the like;

Fig. 4 schematically shows a concrete slab incorporating a plurality of cells identical to that illustrated in Figure 3;

Fig. 5 is a schematic view showing another machine for the continuous production of the sealed cells forming the heat accumulator according to the present invention;

Fig. 6 shows part of a continuous belt of cells produced with the machine of Figure 5; and

Fig. 7 is a graph reporting temperature curves in function of the heat exchanged per unit of volume, of one of the chemical substances used in the present invention. The curves illustrate a hypothesis of behaviour of this substance.

The accumulator according to the present invention is formed of a plurality of cells C filled with a substance F having a high latent melting heat.

The cells C are formed of a plastic material having the following characteristics: it is thermoformable, apt to be heat sealed and it has a high coefficient of thermal conductivity. A preferred material is constituted by coextrude, high-density polyethylene. The term "coextruded" is intended for a high-density polyethylene extruded simultaneously with a thin-film polyethylene, which perfectly adheres to the first, increasing its heat-sealing characteristics (obviously on the side where the thin film is applied).

The cells C enclose in their inner part a certain quantity of substance F with high latent melting heat, the melting temperature of which is included between 0°C and 100°C. Various chemical compounds are apt to fulfil these conditions. The substance F will preferably be selected among the chemical compounds belonging to the group comprising hydrate salts, hydrate phosphates, sulphates and sulphites. Among the indicated products, the following have been tested with success:

| decahydrate sodium sulphate | m.p. 32.4°C | $Q_1$ | 85 kcal/dm$^3$≈(356 kJ/dm$^3$) |
| dodecahydrate bisodium phosphate | m.p. 36°C | $Q_1$ | 90 kcal/dm$^3$≈(376 kJ/dm$^3$) |
| heptahydrate bisodium phosphate | m.p. 48°C | $Q_1$ | 90 kcal/dm$^3$≈(376 kJ/dm$^3$) |

where m.p. is the melting point of the substance, and $Q_1$ is its latent melting heat per unit of volume.

All these products have a high latent melting heat per unit of volume (equal to an average of about 80—90 times the specific heat per unit of volume of water), and they also have melting temperatures included between 0°C and 100°C. The melting temperature of the substance F forms the parameter according to which each chemical compound is preferred for a specific application, as better explained hereinafter.

As previously stated, this type of chemical compounds, if subjected to a series of melting cycles and subsequent crystallization, may undergo—due to possible separations of the phases or evaporation of the components—a decay of its physical characteristics, particularly those specified heretofore, which condition the proper working thereof. The Applicant has now been able to establish, surprisingly, that if such chemical compounds are enclosed into sealed cells of small dimensions, the above drawback is substantially eliminated, that is, the decay of the physical characteristics of said chemical compounds occurs only after such a high number of cycles, as not to be felt in the practical uses.

In particular, the volume of the cell C will have to be less than a critical volume equal to about 1 dm$^3$. Preferably, said volume will be far more limited, for instance comprised between 50 and 100 cc. In these conditions, the substance F may perform a very high number of cycles—for instance, up to about 3500 cycles—without undergoing any altering. Since, in current applications, such a number of cycles corresponds to a period of time of about a hundred years, it can be understood how the desired working of the substance F is practically unlimited.

Increasingly smaller volumes of the cells C involve an increase in the number of cycles, which the substance F can perform without undergoing any altering. On the other hand, a reduction in the size of the cells C involves an increase in the total production costs thereof. It will thus be necessary to find an economical "optimum" arrangement to determine the ideal size of the cells C, taking also into account the requirements dictated by the various types of uses.

The cells C are formed according to a particularly simple process, comprising the following stages:

— forming a plurality of small cavities into at least one sheet of thermoformable plastic material;
— filling said cavities with said substance F having a high latent melting heat, at a temperature above the melting point of said substance, so as to keep it at the fluid state during the filling operations;
— heat sealing said cavities, under partial vacuum, so as to form a plurality of sealed cells C, filled with said substance F and practically having no air locks.

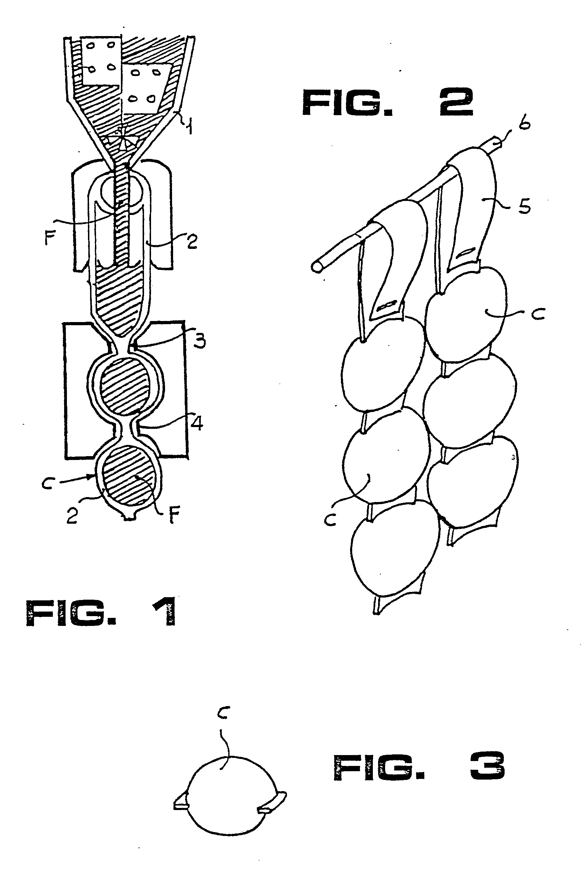

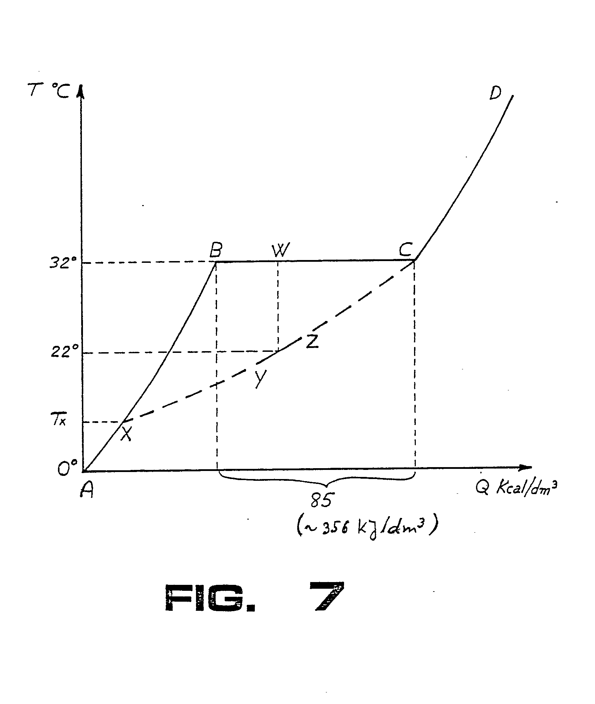

Two different machines, apt to carry out this process, are schematically illustrated in Figures 1 and 5. The two machines produce cells C with different final shapes, which can be suited for different applications.

The machine illustrated in Figure 1 substantially comprises a head 1, which provides to pour the substance F inside the sheet 2 of plastic material, having a tubular shape. The head 1 may be constituted by an extruder, apt to extrude the tubular sheet 2 simultaneously with the feeding of the substance F. The sealing operation of the single cells takes place in 3 and 4, thereby obtaining chains of cells, as illustrated in Figure 2.

These chains of cells C can have an end tailpiece 5, apt to be folded over. The tailpiece 5 allows to promptly hang the chains of cells C onto bars 6, or other hooking means, provided at the top of heat storage reservoirs (not shown).

The machine illustrated in Figure 5 comprises instead a first roll 7 of plastic sheet material, into which are impressed in 8, by thermoforming, a series of cavities 9 of the dimensions desired for the cells C. Said cavities are filled in 10, and subsequently the whole sheet is covered in 12 with a second sheet of plastic material coming from the roll 11. Finally, the two sheets are reciprocally sealed in 13, in the contact areas surrounding the filled cavities. This allows to obtain a continuous belt of cells C, a portion of which is shown in Figure 6, positioned upside-down in respect of the position with which it comes out of the machine for its production.

Evidently, the aforedescribed machines are only some possible examples of carrying out the above illustrated process, of which there may obviously be other embodiments, according also to the shape desired for the cells C.

The heat accumulator according to the present invention finds its best use—as already seen in the introductory part—in all those cases in which the temperature of the heat source is too low to be able to be utilized in any other way. This accumulator, in fact, by making use of the high latent heat of the substance F, allows to store large amounts of heat in a small space, restoring said heat at the most appropriate moment.

The accumulators may be placed in direct contact with any heat source, as for example sun radiation, industrial heat excesses, thermal exchange fluids, and the like. In the presence of temperatures higher than the exchange tem-

4

perature of the substance F (define hereinafter), this latter absorbs heat and gradually melts. This heat is automatically and promptly restored, by renewed solidification of the substance F, as soon as the temperature drops below said exchange temperature. The amount of heat absorbed per unit of volume is obviously in relation to the value of the latent heat of each single compound forming the substance F.

The heretofore specified exchange temperature is the temperature at which the heat backflow between substance F and environment takes place (here and hereinafter it is meant—unless otherwise indicated—that the substance F absorbs or transfers heat exclusively under form of latent heat). If the environment has temperatures below the exchange temperature, heat is transferred from the substance F to the environment through a gradual solidification of the substance itself. Vice versa, if the environment has a temperature which is higher than the exchange temperature, heat is transferred from the environment to the substance F.

The aforementioned characteristics would lead to the conclusion that the exchange temperature should coincide with the melting temperature of the substance F. Whereas, the Applicant was actually able to ascertain, experimentally, that the exchange temperature is usually below the melting temperature and that it depends, as well as from this latter, also from the amount of substance F present in the support (slab, wall or the like), from the thickness of said support and, finally, from the total coefficient of thermal conductivity K of the support itself.

Always experimentally, it has been able to establish, through special temperature probes, that the substance F is apt to absorb heat even at temperatures up to 15°—20°C lower than the melting temperature, in conditions of slow cooling or heating of the environment, while in fast cooling conditions the substance promptly (within a few seconds) reaches its own melting temperature.

This last characteristic is particularly interesting because, in case of a sudden drop of the external temperature, the substance F reaches its own melting temperature and it is therefore apt to transfer large quantities of heat in a short time (due to the increase in the difference of temperature) restoring in the environment the desired temperature conditions.

On account of these characteristics, the accumulator according to the present invention lends itself particularly well for use in applications which require the temperature to keep constant around a predetermined value, for instance typically in the conditioning of rooms, where it will be able to perform the double function of producing heat in the winter season and of absorbing the same in the summer season.

A possible theoretical hypothesis will now be given apt to justify the apparently anomalous behaviour of the substance F forming the accumulator according to the present invention, that is, its capability to absorb heat, under form of latent heat, even at temperatures below the melting temperature.

Fig. 7 shows a qualitative graph of a heating curve of a typical substance F, with melting point of 32°C. In abscissae are reported the quantities of heat Q in $kcal/dm^3$, while the ordinates indicate the temperature T in °C.

The line A—B represents the heating of the substance F at the solid state from T=0° to T=32° (melting temperature). The horizontal line B—C represents the melting at a constant temperature, supplying 85 $kcal/dm^3$ ($\sim$356 $kJ/dm^3$), and finally, the line C—D represents the heating of the substance F completely melted.

One assumes the presence of a metastable branch C—X, which appears in conditions of a slow cooling, eventually followed by an equally slow heating. The presence of said branch justifies the fact that latent heat is not exclusively exchanged at the temperature of 32°, but in a range of temperatures included between 32° and a temperature $T_x$, which cannot be exactly defined but which anyhow varies between 8° and 15°.

The exchange temperature of the substance F—but only, as said, in slow cooling eventually followed by slow heating conditions—can be set at any point of this range of temperatures, by acting on the parameters already seen heretofore, which can be suitably programmed at the planning stage. In the event of the exchange temperature being set at 22°C (a typical value for the conditioning of rooms), the working area of the substance F will cover the arc of the curve Y—Z. The result is that, in conditions of high insulation during the summer period, any rise of temperature above the exchange temperature will cause a partial melting of the substance F with conversion of the heat of the atmosphere into latent heat of the substance F. The temperature increase of the substance F, resulting from this melting, is very limited and does not exceed—in the course of a particularly hot day—a few tenths of a degree. It is therefore quite evident how, in this way, it is possible to obtain a perfect conditioning action, in the sense heretofore specified.

It should furthermore be noted that this hypothesis satisfactorily explains the behaviour of the substance F in the event of sudden cooling. In fact, in this case (for instance during a strong summer storm), the substance F abandons the state of unstable equilibrium relative to the curve C—X, and immediately moves to the corresponding stable condition W at the temperature of 32°C, due to the supply of heat deriving from the simultaneous solidification of a part of said substance F.

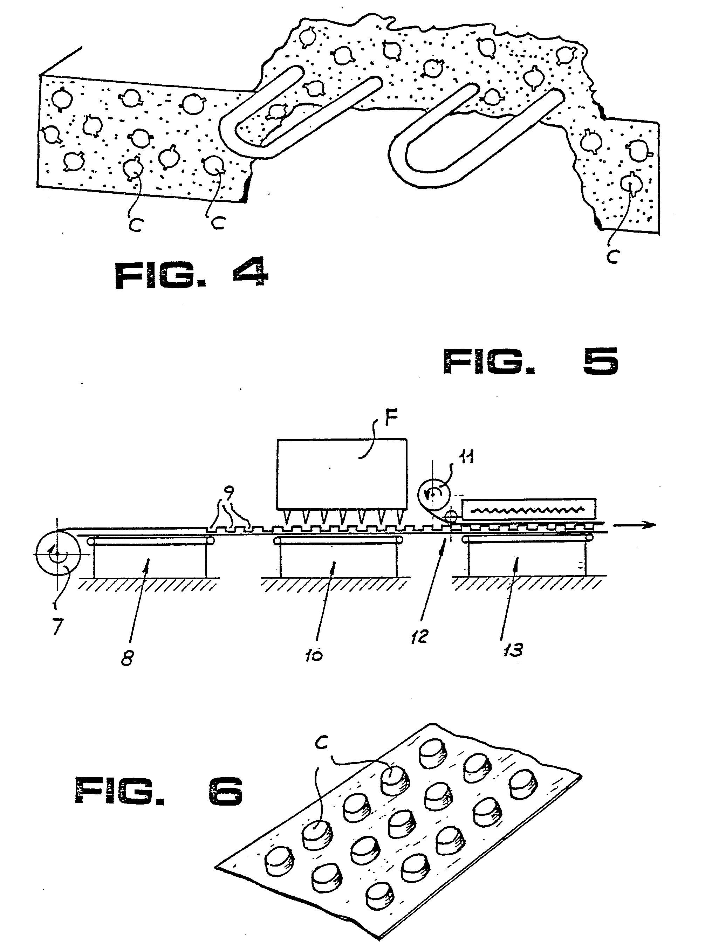

When applied for conditioning rooms, the single cells C (separated the ones from the others, as shown in Figure 3) may be mingled directly with concrete, or the like, for casting slabs or walls of buildings to be conditioned (Figure 4). Alternatively the cells C in the shape shown in Figure 6) may constitute a continuous layer positioned between the slab and the finishing mantle of floorings. This arrangement allows to obtain inside the buildings a practically constant temperature value compensating the temperature differences tied to the day-night cycle. Furthermore, this arrangement—in association with special central storage reservoirs forming large reserves of latent heat—allows to distribute the heat required for heating rooms during the winter season.

In such central heat storage reservoirs, the cells C are arranged as illustrated in Figure 2, or else in the form of belts (Figure 6) placed astride of the bars 6, inside reservoirs filled with a working fluid (for instance water) apt to constitute the heat transmission means between the single cells C of each reservoir, and between these cells and the cells C scattered into the walls of the building.

By way of example, we are giving hereunder the formulas of some preferred types of substances F, indicating—in their order—the melting temperature, the latent heat in kcal/dm$^3$, and the exchange temperature in °C. For each formula, the field of application is indicated:

a) 32/85/22 and 36/90/36 for the heating of rooms, with positioning of the cells C within the concrete elements forming the buildings to be conditioned (preferably floorings). The first formula is adopted in the case of residences, industrial plants and the like. The second formula is typically studied for application to greenhouses or other similar constructions having the same heating requirements;

b) 48/90/55 for storing hot water for sanitary uses and for heat storage processes and thermo-mixing in general (central heat storage reservoirs). In this case the exchange temperature is controlled by means of a thermostat, which circulates the hot water coming from the heat collectors only when its temperature exceeds the exchange temperature. This latter is then determined so as to provide a sufficient temperature jump in respect of the melting temperature of the substance F.

Obviously, other types of substances F, with different formulas, may be prearranged for applications which require different operative temperatures; for instance, a formula of the type 32/85/10 could be perfectly suited to prevent the forming of ice onto viaducts, or in other similar special applications.

From the foregoing, it is undoubted that the present invention has fully attained its intended objects. It in fact provides a heat accumulator which is apt to store, in a limited space large quantities of heat, at a temperature prearranged according to the temperature of the heat source being utilized and according to the requirements of use. Furthermore, as seen, the accumulator has a very long and practically unlimited life.

The invention is particularly suited for solar plants without concentration of the radiations, to which it confers a high degree of autonomy, compensating not only the temperature differences connected with the day-night period, but above all the radiation shortages connected with the autumn-winter periods.

**Claims**

1. Latent heat accumulator, of the type using a substance with a high latent melting heat per unit of volume and with a high thermal conductivity, said substance being enclosed in a plurality of sealed cells formed of a thermoformable plastic material apt to be heat sealed, characterized in that said substance is a chemical compound included in the group consisting of hydrate salts, each of said cells has its three dimensions of the order of magnitude of centimeters and a volume of less than 100 cc, and said substance has a melting temperature included between 0°C and 100°C.

2. Accumulator as in claim 1, wherein said hydrate salts are hydrate phosphates, sulphates and sulphites.

3. Accumulator as in claim 1, wherein said cells form a continuous belt containing several cells placed crosswise.

4. Process for the production of a latent heat accumulator, of the type using a substance with high latent melting heat per unit of volume and with a high thermal conductivity, characterized by comprising the stages of:

— forming a plurality of small cavities into at least one sheet of a thermoformable plastic material;
— filling said cavities with said substance having a high latent melting heat, at the fluid state;
— heat sealing said cavities under partial vacuum, so as to form a plurality of sealed cells, filled with the substance and practically having no air locks.

5. Process as in claim 4, for producing a latent heat accumulator in form of a continuous chain, wherein said sheet of plastic material is a tubular sheet and is coextruded simultaneously with the feeding of said substance with high latent melting heat, and said cavities and cells are formed by heat sealing operations on the tubular sheet.

6. Process as in claim 4, for producing a latent heat accumulator as in claim 3, wherein said cavities are obtained, by thermoforming, into a first sheet of plastic material and, after the cavities have been filled with said substance having a high latent melting heat, a second sheet of plastic material is applied on the first and sealed thereon in the contact areas surrounding the cavities.

7. Process as in claims 4, 5 or 6, wherein said sealed cells are subsequently separaated the ones from the others.

8. Use of a latent heat accumulator as in any one of the preceding claims 1 to 3, in room conditioning plants making use of solar energy, wherein said cells, either singly or in the form of a belt, are incorporated into the concrete of the slabs or of the walls.

9. Use of a latent heat accumulator as in any one of the preceding claims 1 to 3, in heat regeneration plants at temperatures included between 0°C and 100°C.

**Patentansprüche**

1. Latentwärmespeicher der Ausführungsart, die eine Substanz mit einer hohen latenten Schmelzwärme pro Volumeneinheit und mit einer hohen Wärmeleitfähigkeit verwendet, wobei besagte Substanz in mehrere versiegelte Zellen eingeschlossen ist, die aus einem thermisch verformbaren Kunststoffmaterial hergestellt sind, das dazu geeignet ist, heißgesiegelt zu werden, dadurch gekennzeichnet, daß besagte Substanz eine chemische Verbindung aus der Gruppe, bestehend aus Hydratsalzen, ist, jede der besagten Zellen in ihren drei Dimensionen eine Größenordnung von Zentimetern und ein Volumen von weniger als 100 cm³ aufweist und besagte Substanz eine Schmelztemperatur besitzt, die zwischen 0°C und 100°C liegt.

2. Speicher nach Anspruch 1, wobei besagte Hydratsalze Hydratphosphate, -sulfate und -sulfite sind.

3. Speicher nach Anspruch 1, wobei besagte Zellen einen fortlaufenden Gürtel bilden, der mehrere quer angeordnete Zellen enthält.

4. Verfahren zur Herstellung eines Latenwärmespeichers der Ausführungsart, die eine Substanz mit hoher latenter Schmelzwärme pro Volumeneinheit und mit einer hohen Wärmeleitfähigkeit verwendet, dadurch gekennzeichnet, daß es folgende Schritte aufweist:

— Bildung mehrerer kleiner Vertiefungen in wenigstens einem Bogen eines thermisch verformbaren Kunststoffmaterials;
— Füllen besagter Vertiefungen mit besagter Substanz, die ein hohe latente Schmelzwärme aufweist, im flüssigen Zustand;
— Heißsiegeln besagter Vertiefungen im partiellen Vakuum, um mehrere versiegelte Zellen zu bilden, die mit der Substanz gefüllt sind und praktisch keine Lufteinschlüsse aufweisen.

5. Verfahren nach Anspruch 4, zum Herstellen eines Latentwärmespeichers in Form einer fortlaufenden Kette, wobei besagter Bogen aus Kunststoffmaterial ein röhrenförmiger Bogen ist und gleichzeitig mit der Zuführung besagter Substanz mit hoher latenter Schmelzwärme koextrudiert wird, und besagte Vertiefungen und Zellen durch Heißsiegelvorgänge am röhrenförmigen Bogen gebildet werden.

6. Verfahren nach Anspruch 4, zum Herstellen eines Latentwärmespeichers nach Anspruch 3, wobei besagte Vertiefungen durch thermisches Verformen eines ersten Bogens aus Kunststoffmaterial erhalten werden und, nachdem die Vertiefungen mit besagter Substanz, die eine hohe latente Schmelzwärme aufweist, gefüllt worden sind, ein zweiter Bogen aus Kunststoffmaterial auf den ersten aufgebracht und darauf in den Kontaktbereichen, die die Vertiefungen umgeben, versiegelt wird.

7. Verfahren nach den Ansprüchen 4, 5 oder 6, wobei nachträglich besagte versiegelte Zellen voneinander getrennt werden.

8. Verwendung eines Latentwärmespeichers nach einem der vorangehenden Ansprüche 1 bis 3 in Raumklimatisieranlagen, die von Solarenergie Gebrauch machen, wobei besagte Zellen, entweder einzeln oder in der Form eines Gürtels, in den Beton der Platten oder der Wände eingebaut werden.

9. Verwendung eines Latentwärmespeichers nach einem der vorangehenden Ansprüche 1 bis 3 in Wärmerückgewinnungsanlagen bei Temperaturen, die zwischen 0°C und 100°C liegen.

**Revendications**

1. Accumulateur de chaleur latente, du type utilisant une substance ayant une forte chaleur latente de fusion par unité de volume et une grande conductibilité thermique, ladite substance étant enfermée dans une pluralité de cellules scellées formées d'une matière plastique thermoformable pouvant être scellée à chaud, caractérisé en ce que ladite substance est un composé chimique inclus dans le groupe se composant de sels hydratés, chacune desdites cellules ayant ses trois dimensions qui sont de l'ordre de grandeur de centimètres et un volume inférieur à 100 cm³, et ladite substance a une température de fusion comprise entre 0°C et 100°C.

2. Accumulateur selon la revendication 1, caractérisé en ce que lesdits sels hydratés sont des phosphates, des sulfates et sulfites hydratés.

3. Accumulateur selon la revendication 1, caractérisé en ce que lesdites cellules forment une bande continue contenant plusieurs cellules placées transversalement.

4. Procédé pour la production d'un accumulateur de chaleur latente, du type utilisant une substance ayant une forte chaleur latente de fusion par unité de volume et une grande conductibilité thermique, caractérisé en ce qu'il comprend les étapes consistant à:

— former une pluralité de petites cavités dans au moins une feuille d'une matière plastique thermoformable;
— remplir lesdites cavités avec une substance ayant une forte chaleur latente de fusion, à l'état fluide;
— sceller à chaud lesdites cavités sous un vide partiel, de façon à former une pluralité de cellules scellées, remplies de la substance et ne comportant pratiquement aucun tampon d'air.

5. Procédé selon la revendication 4, pour produire un accumulateur de chaleur latente sous la forme d'une chaîne continue, caractérisé en ce que ladite feuille de matière plastique est une feuille tubulaire et est coextrudée en même temps que l'alimentation de ladite substance de forte chaleur latente de fusion, et lesdites cavités et cellules sont formées par des opérations de scellement à chaud sur la feuille tubulaire.

6. Procédé selon la revendication 4, pour produire un accumulateur de chaleur latente selon la revendication 3, caractérisé en ce que lesdites cavités sont obtenues, par thermoformage, dans une première feuille de matière plastique et, après que les cavités ont été remplies de ladite substance ayant une forte chaleur latente de fusion, une seconde feuille de matière plastique est appliquée sur la première et scellée sur celle-ci dans les zones de contact entourant les cavités.

7. Procédé selon les revendications 4, 5 ou 6, caractérisé en ce que lesdites cellules scellées sont ensuite séparées les unes des autres.

8. Utilisation d'un accumulateur de chaleur latente selon l'une quelconque des revendications précédentes 1 à 3, dans des installations de conditionnement de pièces utilisant une énergie solaire, caractérisée en ce que lesdites cellules sont incorporées, soit individuellement soit sous la forme d'une bande, dans le béton des dalles ou des murs.

9. Utilisation d'un accumulateur de chaleur latente selon l'une quelconque des revendications précédentes 1 à 3, dans des installations de récupération de chaleur à des températures comprises entre 0°C et 100°C.

FIG. 2

FIG. 1

FIG. 3

FIG. 4

FIG. 5

FIG. 6

FIG. 7